# EUROPÄISCHE PATENTSCHRIFT

(11) **EP 1 293 099 B1**
(45) Veröffentlichungstag und Bekanntmachung des Hinweises auf die Patenterteilung: **12.09.2012**
(21) Anmeldenummer: 01951415.7
(22) Anmeldetag: 20.06.2001
(51) Int. Cl.: H04W 4/14

(54) **VERFAHREN ZUR ÜBERTRAGUNG VON KURZNACHRICHTEN**
METHOD FOR TRANSMITTING SHORT MESSAGES
PROCEDE POUR LA TRANSMISSION DE MESSAGES COURTS

(30) Priorität: 20.06.2000 DE 10030272
(43) Veröffentlichungstag der Anmeldung: 19.03.2003
(73) Patentinhaber: SIEMENS AKTIENGESELLSCHAFT, 80333 München (DE)
(72) Erfinder: BÄR, Siegfried, 75179 Pforzheim (DE); BECKMANN, Mark, 38102 Braunschweig (DE); GOTTSCHALK, Thomas, 38126 Braunschweig (DE); HANS, Martin, 31141 Hildesheim (DE); KOWALEWSKI, Frank, 38228 Salzgitter (DE); LAUMEN, Josef, 31141 Hildesheim (DE); SCHANGE, Frank, 31135 Hildesheim (DE); SCHMIDT, Gunnar, 38304 Wolfenbüttel (DE)
(86) Internationale Anmeldenummer: PCT/DE2001/002289
(87) Internationale Veröffentlichungsnummer: WO 2001/099440

(56) Entgegenhaltungen:
- EP-A- 0 300 350
- WO-A-94/09599
- GB-A- 2 291 523
- GB-A- 2 317 073
- PATENT ABSTRACTS OF JAPAN vol. 1998, no. 13, 30. November 1998 (1998-11-30) & JP 10 210067 A (NEC CORP), 7. August 1998 (1998-08-07)
- ETSI: "Universal Mobile Telecommunications System (UMTS); Technical realization of the Short Message Service (SMS) (3G TS 23.040 version 3.3.0 Release 1999)" ETSI TS 123 040 V3.3.0 (2000-01), Januar 2000 (2000-01), Seiten 1-117, XP002203228 France in der Anmeldung erwähnt

## Beschreibung

Die Erfindung betrifft ein Verfahren und ein System zur Übertragung einer Kurznachricht in einem Telekommunikationsnetz an mehrere Kommunikationsteilnehmer, wobei die Kurznachricht eine zweite Kopfinformation und ein Datenteil umfasst.

Verfahren zur Übertragung von Kurznachrichten sind beispielsweise für das GSM-Mobilfunknetz (Global System for Mobile Communications) bekannt und dort als SMS-Kurznachrichtendienst (Short Message Service) realisiert. Beim SMS-Kurznachrichtendienst kann für das Versenden einer Kurznachricht nur ein einziger Empfänger angegeben werden. Soll die gleiche Kurznachricht auch an andere Empfänger versendet werden, so muss diese vom Absender mehrfach versendet werden.

Aus der WO99/57927 ist ein Verfahren zum Zustellen einer SMS-Kurznachricht in einem Mobilfunknetz bekannt, bei dem die jeweilige SMS-Kurznachricht einen "header", d.h. einen Kopfabschnitt, mit einem zusätzlichen Gruppenidentifikationscode vor dem eigentlichen Nachrichtenteil aufweist. Diese SMS-Kurznachricht wird dabei von der Basisstation einer Funkzelle grundsätzlich an alle dort sich aufhaltenden, mobilen Endgeräte über einen Broadcast-Funkkanal übermittelt. Das jeweilige mobile Endgerät weist einen Speicher wie z.B. eine SIM-Karte (Subscriber Identity Module) auf, auf dem Identifikationscodes für diejenigen Gruppen als Liste abgespeichert sind, zu denen dieses Endgerät gehört. Nur in dem Fall, dass das jeweilige mobile Endgerät durch Vergleich feststellt, dass der Gruppenidentifikationscode der empfangenen SMS-Kurznachricht mit dem abgespeicherten Gruppenidentifikationscode übereinstimmt, wird die SMS-Nachricht auf dem Endgerät überhaupt angezeigt. Auf diese Weise wird die jeweilige SMS-Nachricht von der Basisstation in der jeweiligen Funkzelle an jedes sich dort aufhaltende mobile Teilnehmergerät einzeln übertragen und erst in jedem einzelnen Teilnehmergerät selbst mit Hilfe des Gruppenidentifikationscode-Vergleichs ein selektiver Empfang vorgenommen.

Um dasselbe Datenpaket ausgehend von einem Rechner eines ersten Netzwerks zu einer Vielzahl von Rechnern eines anderen Netzwerks unter Einsparung von Netzlast verteilen zu können, sind in der JP 10 210067 anstelle der tatsächlichen Zieladressen der Zielrechner diese Zieladressen in einem Abschnitt des vorangestellten Packet-Headerfelds des Datenpakets als "1.1, 1.2, y.z"" gekennzeichnet, d.h. lediglich durch eine Durchnummerierung der Zielrechner und nicht durch deren tatsächlichen Adressdaten beschrieben. Im eigentlichen Datenteil des Datenpakets sind keine Zieladressen vorgesehen.

Beim Routingverfahren der EP 0 300 350 werden ausgehend von einem sendenden Endgerät, das an ein erstes Bussystem angeschlossen ist, mehrere Funktionsbefehle in einer Kommunikationsnachricht via einem Gateway lediglich an ein einzelnes Ziel-Endgerät übertragen, das an ein zweites Bussystem angeschlossen ist. In der Kommunikationsnachricht folgen dabei separate Header- und Datenfelder aufeinander, wobei den Headerfeldern nur Sende- und Empfangsadressen sowie den Datenfeldern ausschließlich Funktionsbefehle bzw. Kommandos zugeordnet sind.

Der Erfindung liegt die Aufgabe zugrunde, einen Weg aufzuzeigen, wie eine Kurznachricht an mehrere Kommunikationsteilnehmer in einfacher und aufwandsparender Weise verteilt werden kann. Diese Aufgabe wird bei dem erfindungsgemäßen Verfahren der eingangs genannten Art dadurch gelöst, dass mit einer Kurznachricht Adressdaten für die Übertragung der Kurznachricht zu mehr als einem Kommunikationsteilnehmer übertragen werden, indem im Datenteil dieser Kurznachricht eine erste Kopfinformation mit mehreren Datenfeldern übertragen wird, die die Adressdaten mindestens eines Kömmunikationsteilnehmers umfassen, und in der zweiten Kopfinformation, die der ersten Kopfinformation vorangestellt angeordnet ist, Adressdaten eines ersten Kommunikationsteilnehmers oder einer Netzwerkeinheit übertragen werden.

Das erfindungsgemäße Verfahren zur Übertragung von Kurznachrichten mit den Merkmalen des Hauptanspruchs hat demgegenüber den Vorteil, däss mit einer Kurznachricht Adressdaten für die Übertragung der Kurznachricht zu mehr als einem Kommunikationsteilnehmer übertragen werden. Auf diese Weise kann die Kurznachricht gleichzeitig an mehrere Kommunikationsteilnehmer bzw. Empfänger versendet werden, so dass für den Absender zeit und Aufwand eingespart wird.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, dass für mehrere Zieladreßdatenfelder genau ein signalisierungskennzeichnungsdatenfeld mit der ersten Kopfinformation übertragen wird. Auf dieser Weise wird die im Datenteil für die erste Kopfinformation beanspruchte Datenmenge reduziert, so dass für die Nutzdaten eine größere Datenkapazität in der Kurznachricht verfügbar ist.

### Zeichnung

Ausführungsbeispiele der Erfindung sind in der Zeichnung dargestellt und in der nachfolgenden Beschreibung näher erläutert. Es zeigen Figur 1 ein Blockschaltbild für die Übertragung von Kurznachrichten über ein erstes Telekommunikationsnetz und ein zweites Telekommunikationsnetz, Figur 2 einen prinzipiellen Aufbau einer Kurznachricht, Figur 3 einen Aufbau einer ersten Kopfinformation mit Datenfeldern für die Übertragung von Adreßdaten, Figur 4 ein erstes Ausführungsbeispiel für den Aufbau der ersten Kopfinformation, Figur 5 ein zweites Ausführungsbeispiel für den Aufbau der ersten Kopfinformation und Figur 6 ein drittes Ausführungsbeispiel für den Aufbau der ersten Kopfinformation.

### Beschreibung der Ausführungsbeispiele

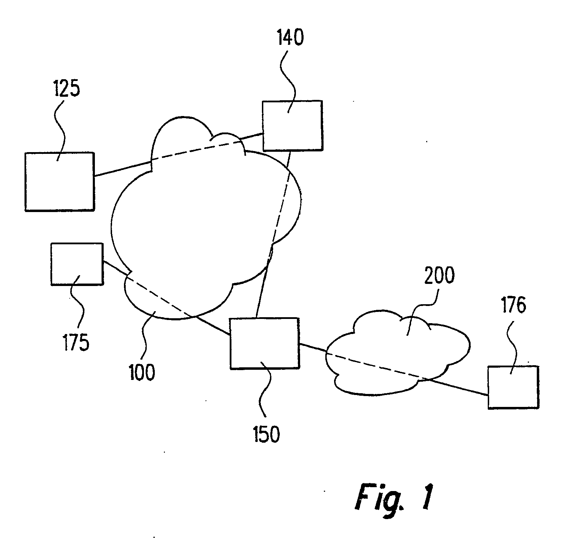

In Figur 1 kennzeichnet 125 einen Sender, der eine Kurznachricht an eine erste Netzwerkeinheit 140 über ein erstes Telekommunikationsnetz 100 überträgt. Die erste Netzwerkeinheit 140 leitet die Kurznachricht über das erste Telekommunikationsnetz 100 an eine zweite Netzwerkeinheit 150 weiter, die sowohl eine Netzwerkeinheit des ersten Telekommunikationsnetzes 100 als auch eine Netzwerkeinheit eines zweiten Telekommunikationsnetzes 200 darstellt. Von der zweiten Netzwerkeinheit 150 kann die Kurznachricht somit einerseits über das erste Telekommunikationsnetz 100 zu einem ersten Kommunikationsteilnehmer 175 und über das zweite Telekommunikationsnetz 200 an einen zweiten Kommunikationsteilnehmer 176 übertragen werden.

Die erste Netzwerkeinheit 140 und die zweite Netzwerkeinheit 150 sind gemäß Figur 1 als zwei getrennte Einheiten ausgeführt. Sie können jedoch in eine gemeinsame Einheit integriert sein.

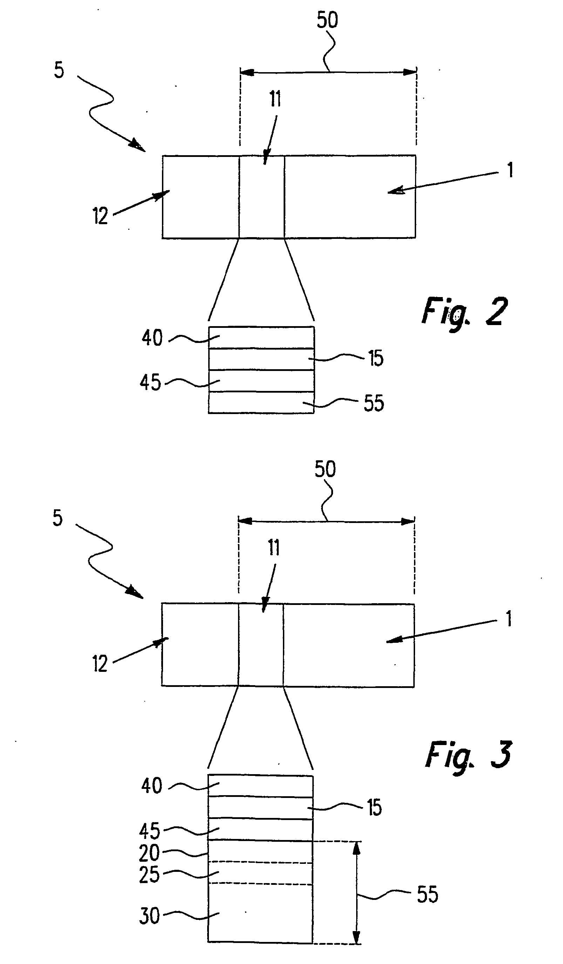

In Figur 2 kennzeichnet 5 eine Kurznachricht. Die Kurznachricht 5 wird vom Sender 125 des ersten Telekommunikationsnetzes 100 erzeugt und wie beschrieben über die erste Netzwerkeinheit 140 des ersten Telekommunikationsnetzes 100 an die zweite Netzwerkeinheit 150 über das erste Telekommunikationsnetz 100 übertragen. Für die Übertragung solcher Kurznachrichten 5 wird dazu im ersten Telekommunikationsnetz 100 und im zweiten Telekommunikationsnetz 200 ein sogenannter Kurznachrichtendienst eingerichtet. Ein solcher Kurznachrichtendienst existiert beispielsweise in einem als Mobilfunknetz ausgebildeten Telekommunikationsnetz. Dabei soll im folgenden beispielhaft angenommen werden, dass das erste Telekommunikationsnetz 100 und das zweite Telekommunikationsnetz 200 jeweils als Mobilfunknetz ausgebildet sind. Dabei kann es sich bei einem solchen Mobilfunknetz beispielsweise um ein Mobilfunknetz nach dem GSM-Standard (Global System for Mobile Communications) oder nach dem UMTS-Standard (Universal Mobile Telecommunications System) handeln. Beim GSM-Mobilfunknetz ist der sogenannte SMS-Kurznachrichtendienst (Short Message Service) spezifiziert, der die Versendung von SMS-Kurznachrichten zwischen einem Sender und einem Empfänger zur Verfügung stellt, wobei die SMS-Kurznachrichten auf Textnachrichten einer maximalen Textlänge von derzeit 160 Zeichen beschränkt sind. Sollen größere Textnachrichten übertragen werden, so bietet der SMS-Kurznachrichtendienst die Möglichkeit einer Verkettung mehrerer SMS-Kurznachrichten an, d.h. die zu übertragende Kurznachricht wird auf mehrere SMS-Kurznachrichten verteilt. Die in der Figur 2 dargestellte Kurznachricht 5 umfasst grundsätzlich eine zweite Kopfinformation 12 und ein Datenteil 50. Die zweite Kopfinformation 12 umfasst Signalisierungseinträge sowie eine erste Zieladresse für die zu sendende Kurznachricht 5 bzw. eine Quelladresse für die zu empfangende Kurznachricht 5. Die erste Zieladresse kennzeichnet die zweite Netzwerkeinheit 150 als Empfänger der Kurznachricht 5 im ersten Telekommunikationsnetz 100 und die Quelladresse kennzeichnet den Sender 125 der Kurznachricht 5 im ersten Telekommunikationsnetz 100. Der Datenteil 50 umfasst die eigentlich zu übertragende Nachricht und damit die sogenannten Nutzdaten, die in Figur 2 durch das Bezugszeichen 1 gekennzeichnet sind. Beim SMS-Kurznachrichtendienst werden dabei die Quelladresse bzw. die erste Zieladresse gemäß den Veröffentlichungen "Technical Realisation of the Short Message Service (SMS); Point to Point (PP)" GSM 03.40 V 7.1.0, (1998-11) und "Technical Realisation of the Short Message Service (SMS); Point to Point (PP)" 3G23.040 V 3.2.0 (1999-10) über eine sogenannte MSISDN-Nummer (Mobile Subscriber Integrated Services Digital Network) identifiziert. Bei der Übertragung der Kurznachricht 5 im ersten Telekommunikationsnetz 100 adressiert die erste Netzwerkeinheit 140, an die die Kurznachricht 5 zunächst vorgegebenermaßen über das erste Telekommunikationsnetz 100 übertragen wird, die zweite Netzwerkeinheit 150 anhand der ersten Zieladresse und ersetzt diese in der zweiten Kopfinformation 12 durch die Quelladresse des Senders 125. Standardgemäß enthält somit die zweite Kopfinformation 12 also genau eine Quelladresse oder genau eine erste Zieladresse.

Die Kurznachricht 5 umfasst gemäß Figur 2 eine erste Kopfinformation 11, die im Datenteil 50 der Kurznachricht 5 den Nutzdaten 1 vorangestellt angeordnet ist. Die erste Kopfinformation 11 wird beim SMS-Kurznachrichtendienst als Benutzerdatenkopfinformation oder "User Data Header" bezeichnet.

Das Vorhandensein der ersten Kopfinformation 11 im Datenteil 50 wird durch einen entsprechenden Signalisierungseintrag in der zweiten Kopfinformation 12 angezeigt. Beim SMS-Kurznachrichtendienst sind verschiedene Typen von "User Data Header" gemäß den genannten Veröffentlichungen "Technical Realisation of the Short Message Service (SMS); Point-to-Point (PP)" spezifiziert. Sie werden dabei durch ein erstes Signalisierungskennzeichnungsdatenfeld 15 in der ersten Kopfinformation 11 gemäß Figur 2 voneinander unterschieden, wobei Figur 2 den Aufbau der ersten Kopfinformation 11 bereits prinzipiell darstellt.

Die im Datenteil 50 der Kurznachricht 5 übertragenen Nutzdaten 1 sollen nun jeweils in Form einer Kurznachricht an mehrere Kommunikationsteilnehmer, in diesem Beispiel an den ersten Kommunikationsteilnehmer 175 und an den zweiten Kommunikationsteilnehmer 176, übertragen werden. Der Signalisierungseintrag in der zweiten Kopfinformation 12 gibt dabei zusätzlich an, dass die in der Kurznachricht 5 enthaltenen Nutzdaten 1 an mehrere Kommunikationsteilnehmer übertragen werden sollen. Diese Signalisierung erfolgt dadurch, dass in der zweiten Kopfinformation 12 auf die erste Kopfinformation 11 im zweiten Datenteil 50 hingewiesen wird. Anhand der ersten Zieladresse in der zweiten Kopfinformation 12 wird die Kurznachricht 5 zunächst wie beschrieben über das erste Telekommunikationsnetz 100 an die erste Netzwerkeinheit 140 übertragen, die als Service-Center eines Netzanbieters des ersten Telekommunikationsnetzes 100 ausgebildet sein kann. Die erste Netzwerkeinheit 140 wertet die erste Zieladresse in der zweiten Kopfinformation 12 aus und sendet die Kurznachricht 5 an die dieser ersten Zieladresse zugeordnete zweite Netzwerkeinheit 150. Die zweite Netzwerkeinheit 150 erkennt anhand der Auswertung des Signalisierungseintrags in der zweiten Kopfinformation 12 das Vorhandensein der ersten Kopfinformation 11 im Datenteil 50. Aufgabe der zweiten Netzwerkeinheit 150 ist nun die Auswertung dieser ersten Kopfinformation 11. In dieser ersten Kopfinformation 11 sind die Zieladressen der Kommunikationsteilnehmer 175, 176 enthalten, an die die Nutzdaten 1 der Kurznachricht 5 jeweils wieder in einer eigenen Kurznachricht übertragen werden sollen. Dabei können diese Kommunikationsteilnehmer 175, 176 über das erste Telekommunikationsnetz 100 und damit dasselbe Telekommunikationsnetz wie der Sender 125 oder über andere Telekommunikationsnetze, wie beispielsweise das zweite Telekommunikationsnetz 200 erreicht werden. Gemäß Figur 1 wird in diesem Beispiel der erste Telekommunikationsteilnehmer 175 über das erste Telekommunikationsnetz und der zweite Telekommunikationsteilnehmer 176 über das zweite Telekommunikationsnetz 200 erreicht. Die zweite Netzwerkeinheit 150 extrahiert die Empfängeradressen dieser Telekommunikationsteilnehmer 175, 176 aus der ersten Kopfinformation 11. Je nach Funktionsumfang der zweiten Netzwerkeinheit 150 kann diese die Nutzdaten 1 in Form jeweils einer Kurznachricht direkt zu den einzelnen Telekommunikationsteilnehmern 175, 176 entweder über das erste Telekommunikationsnetz 100 oder über das zweite Telekommunikationsnetz 200 übertragen. Andernfalls veranlasst die zweite Netzwerkeinheit 150 die erste Netzwerkeinheit 140, die Nutzdaten zu den Kommunikationsteilnehmern 175, 176 mit den aus der ersten Kopfinformation 11 extrahierten Adressen der Telekommunikationsteilnehmer 175, 176 zu versenden. Die Versendung an den zweiten Kommunikationsteilnehmer 176 über das zweite Telekommunikationsnetz 200 kann dabei wiederum über die zweite Netzwerkeinheit 150 erfolgen, da diese auch Teilnehmer des zweiten Telekommunikationsnetzes 200 ist im Gegensatz zur ersten Netzwerkeinheit 140. Die Versendung der entsprechenden Kurznachricht zum ersten Kommunikationsteilnehmer 175 kann dabei von der ersten Netzwerkeinheit 140 direkt über das erste Telekommunikationsnetz 100 erfolgen, wobei dies aus Übersichtlichkeitsgründen in Figur 1 nicht dargestellt ist.

Mit dem Datenteil 50 werden nun mehrere Datenfelder 20, 25, 30 gemäß Figur 3 übertragen, die Adreßdaten für die Übertragung der Nutzdaten 1 zum ersten Kommunikationsteilnehmer 175 und zum zweiten Kommunikationsteilnehmer 176 umfassen. Nach Auswertung dieser Adreßdaten in der zweiten Netzwerkeinheit 150 können die Nutzdaten 1 dann in der beschriebenen Weise an den ersten Kommunikationsteilnehmer 175 und den zweiten Kommunikationsteilnehmer 176 weitergeleitet werden. Dazu muß jedoch der zweiten Netzwerkeinheit 150 mitgeteilt werden, wie diese Datenfelder 20, 25, 30 aufgebaut sind, bzw. ob solche Datenfelder 20, 25, 30 im Datenfeld 50 überhaupt vorhanden sind. Dies geschieht anhand eines Signalisierungskennzeichnungsdatenfeldes 15 in der ersten Kopfinformation 11. Dort gibt ein sogenannter Identifikator an, in welcher Weise die Adreßdaten im Datenteil 50 vorliegen und signalisiert somit außerdem das Vorhandensein der Datenfelder 20, 25, 30 überhaupt. Beispielsweise kann der Identifikator angeben, dass die Datenfelder 20, 25, 30 im Datenteil 50 mehrere Adressen von Kommunikationsteilnehmern für die Zusendung der Nutzdaten 1 umfassen.

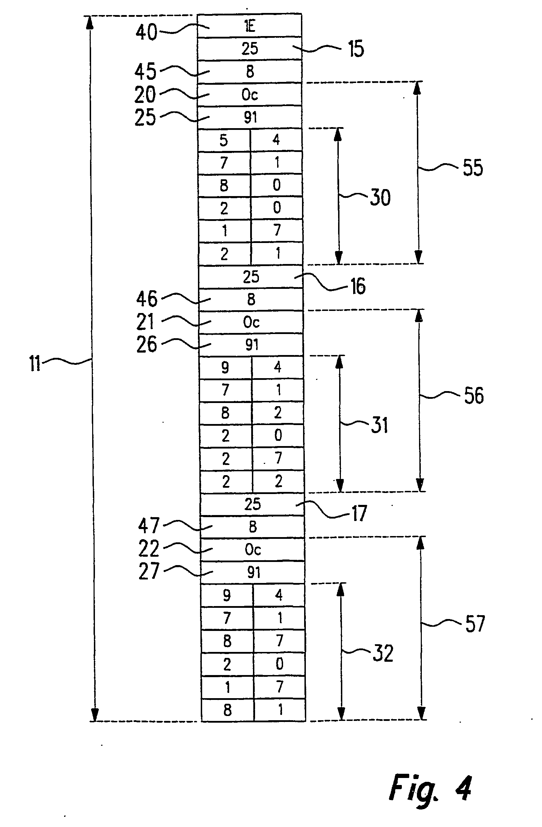

Dem Signalisierungskennzeichnungsdatenfeld 15 der ersten Kopfinformation 11 ist dabei gemäß Figur 2 und Figur 3 ein erstes Längendatenfeld 40 vorangestellt, das die Länge UDHL (User Data Header Length) der ersten Kopfinformation 11 angibt. Dem ersten Längendeatenfeld 40 folgt dann das bereits beschriebene Signalisierungskennzeichnungsdatenfeld 15 mit dem Identifikator IEI (Information Element Identifyer) der in diesem Fall angibt, dass die Datenfelder 20, 25, 30 Adreßdaten für mehrere Kommunikationsteilnehmer 175, 176 umfassen. Das Signalisierungskennzeichnungsdatenfeld 15 wird von einem zweiten Längendatenfeld 45 gefolgt, das die Länge IEIDL (Information Element Identifyer Data Length) der eigentlichen Adreßdaten 55 gemäß Figur 2 in der ersten Kopfinformation 11 angibt. Gemäß Figur 3 werden dabei die eigentlichen Adreßdaten 55 durch die Datenfelder 20, 25, 30 gebildet. Die Adressen der Kommunikationsteilnehmer 175, 176 können beispielsweise gemäß den genannten Veröffentlichungen "Technical Realisation of the Short Message Service (SMS); Point-to-Point (PP)" codiert sein. Die Adreßdaten 55 der ersten Kopfinformation 11 der Kurznachricht 5 sind dabei wie beschrieben jeweils durch die drei Datenfelder 20, 25, 30 gebildet, wobei ein erstes Datenfeld 20 als Längendatenfeld die Länge der Adresse, die beispielsweise in Form einer Telefonnummer vorliegen kann, in halben Oktetten oder sogenannten Semi-Oktetten angibt, die bei Ausbildung der Adresse als Telefonnummer der Ziffernanzahl in der Telefonnummer entspricht. Das erste Datenfeld 20 ist bereits in Figur 3 dargestellt. Es wird gefolgt von einem zweiten Datenfeld 25, das den Typ der Adresse angibt, wie er beispielsweise in der Norm ITU-T E.164/E163 oder ITU-T X.121 spezifiziert ist. Dem zweiten Datenfeld 25 der Adreßdaten 55 in Figur 3 folgt dann ein drittes Datenfeld 30, das die Adresse bzw. die Telefonnummer selbst enthält. Die erste Kopfinformation 11 kann auch mehrere gleiche oder verschiedene Typen von "User Data Header" gemäß den genannten Veröffentlichungen "Technical Realisation of the Short Message Service (SMS); Point-to-Point (PP)" umfassen. Die gemäß Figur 2 und Figur 3 beschriebene Anordnung in der ersten Kopfinformation 11 bestehend aus dem ersten Längendatenfeld 40, dem Signalisierungskennzeichnungsdatenfeld 15, dem zweiten Längendatenfeld 45 und den Adreßdaten 55 können sich in derselben Reihenfolge unter Umständen mehrfach wiederholen, wie in Figur 4 dargestellt ist.

Im folgenden wird ein Beispiel für den Aufbau der ersten Kopfinformation 11 beschrieben. Dabei enthält zunächst die zweite Kopfinformation 12 den Signalisierungseintrag TP-UDHI (Transfer Protocol-User Data Header Identification), der angibt, ob die erste Kopfinformation 11 und damit mehrere Adreßdaten 55, 56, 57 in der Kurznachricht 5 vorliegen. Ist dies der Fall, so ist TP-UDHI auf 1 gesetzt, andernfalls ist TP-UDHI auf 0 gesetzt. Die erste Kopfinformation 11 kann dann beispielsweise wie in Figur 4 dargestellt aufgebaut sein:
Im ersten Längendatenfeld 40 ist die Länge UDHL der ersten Kopfinformation 11 auf 1E im Hexadezimalsystem gesetzt. Im Signalisierungskennzeichnungsdatenfeld 15, das im folgenden als erstes Signalisierungskennzeichnungsdatenfeld bezeichnet wird, ist der Identifikator IEI auf 25 im Hexadezimalsystem gesetzt und referenziert durch diesen Wert die beschriebene Adressierung an mehrere Adressen von Kommunikationsteilnehmern 175, 176. Im zweiten Längendatenfeld 45 ist die Länge IEIDL für die Adreßdaten 55, die im folgenden auch als erste Adreßdaten bezeichnet werden, und damit die Länge der Datenfelder 20, 25, 30 der ersten Adreßdaten 55 der ersten Kopfinformation 11 auf 8 im Hexadezimalsystem gesetzt.

Gemäß Figur 4 folgt dem zweiten Längendatenfeld 45 das erste Datenfeld 20 der ersten Adreßdaten 55, das den Wert 0c im Hexadezimalsystem und damit eine Länge der ersten Adreßdaten 55 von 12 Halb-Oktetten oder 6 Byte referenziert, d.h. eine Telefonnummer von 12 Stellen. Dem ersten Datenfeld 20 der ersten Adreßdaten 55 folgt das zweite Datenfeld 25 der ersten Adreßdaten 55, das den Adreßtyp einer internationalen Rufnummer nach ISDN-Standard (Integrated Services Data Network) durch den Wert 91 im Hexadezimalsystem gemäß den genannten Veröffentlichungen "Technical Realisation of the Short Message Service (SMS); Point-to-Point (PP)" referenziert. Dem zweiten Datenfeld 25 der ersten Adreßdaten 55 folgt das dritte Datenfeld 30 der ersten Adreßdaten 55, das in diesem Beispiel als Adresse des ersten Kommunikationsteilnehmers 175 des ersten Telekommunikationsnetzes 100 folgende Telefonnummer umfasst:
+45 170 812 7112.

Diese Adresse ist gemäß dem im zweiten Datenfeld 25 der ersten Adreßdaten 55 spezifizierten Adreßtyp gemäß Figur 4 folgendermaßen ausgebildet:
"547180201721".

Eine Stelle der Telefonnummer entspricht dabei einem Halb-Oktett, d.h. einer Gesamtlänge von 6 Byte. Damit ergibt sich der Wert 8 für das zweite Längendatenfeld 45.

Zur Angabe der Adressen weiterer Kommunikationsteilnehmer wird die Möglichkeit genutzt, dass die erste Kopfinformation 11 mehrere Elemente und somit Adressen mehrerer Kommunikationsteilnehmer enthalten kann. Für dieses Beispiel bedeutet das, dass den ersten Adreßdaten 55 ein zweites Signalisierungskennzeichnungsdatenfeld 16 mit dem Identifikator IEI = 25 im Hexadezimalsystem folgt, der somit dem Identifikator IEI des ersten Signalisierungskennzeichnungsdatenfeldes 15 entspricht. Dem zweiten Signalisierungskennzeichnungsdatenfeld 16 folgt dann ein drittes Längendatenfeld 46, das wie das zweite Längendatenfeld 45 die Länge IEIDL = 8 referenziert. Dem dritten Längendatenfeld 46 folgen dann zweite Adreßdaten 56. Ein erstes Datenfeld 21 der zweiten Adreßdaten 56 referenziert dabei als Längendatenfeld für die zweiten Adreßdaten 56 wie auch das erste Datenfeld 20 der ersten Adreßdaten 55 den Wert 0c im Hexadezimalsystem und somit eine Adreßdatenlänge von 12 Halb-Oktetten. Dem folgt ein zweites Datenfeld 26 der zweiten Adreßdaten 56, das wie auch das zweite Datenfeld 25 der ersten Adreßdaten 55 den Wert 91 für den Typ der mit den zweiten Adreßdaten 56 übertragenen Adresse referenziert. Dem folgt ein drittes Datenfeld 31 der zweiten Adreßdaten 56, das als Adresse des zweiten Kommunikationsteilnehmers 176 des zweiten Telekommunikationsnetzes 200 die Telefonnummer:
+49 172 802 7222
enthält und gemäß dem im zweiten Datenfeld 21 der zweiten Adreßdaten 56 referenzierten Typ wie folgt ausgebildet ist:
"947182202722".

Für den in Figur 1 nicht dargestellten Fall eines dritten Kommunikationsteilnehmers, der über ein drittes Telekommunikationsnetz mit der zweiten Netzwerkeinheit 150 verbindbar ist und an den die Nutzdaten 1 der Kurznachricht 5 ebenfalls in Form einer Kurznachricht übertragen werden sollen, kann gemäß Figur 4 den zweiten Adreßdaten 56 ein drittes Signalisierungskennzeichnungsdatenfeld 17 folgen, das wie das erste Signalisierungskennzeichnungsdatenfeld 15 den Identifikator IEI = 25 im Hexadezimalsystem enthält. Dem dritten Signalisierungskennzeichnungsdatenfeld 17 folgt dann ein viertes Längendatenfeld 47, das wie das zweite Längendatenfeld 45 die Länge IEIDL = 8 im Hexadezimalsystem referenziert. Dem folgen dritte Adreßdaten 57. Diese umfassen ein erstes Datenfeld 22, das wie das erste Datenfeld 20 der ersten Adreßdaten 55 als Längendatenfeld der dritten Adreßdaten 57 den Wert 0c im Hexadezimalsystem referenziert. Dem folgt ein zweites Datenfeld 27 der dritten Adreßdaten 57, das wie das zweite Datenfeld 25 der ersten Adreßdaten 55 den Wert 91 referenziert und damit den selben Adreßtyp wie das zweite Datenfeld 25 der ersten Adreßdaten 55. Dem folgt ein drittes Datenfeld 32 der dritten Adreßdaten 57, das in diesem Beispiel die Adresse bzw. die Telefonnummer des dritten Kommunikationsteilnehmers umfasst, die wie folgt ausgebildet ist:
+49 177 802 7128.

Sie ist gemäß dem im zweiten Datenfeld 27 der dritten Adreßdaten 57 angegebenen Typ wie folgt ausgebildet:
"947187201781".

Die ersten Adreßdaten 55, die zweiten Adreßdaten 56 und die dritten Adreßdaten 57 entsprechen sich somit in dem Typ der mit ihnen übertragenen Adresse bzw. Telefonnummer, sowie der in der ersten Kopfinformation 11 jeweils beanspruchten Datenmenge oder Länge.

In dem in Figur 4 beschriebenen Ausführungsbeispiel entspricht die Codierung der Adressen bzw. der Rufnummern der Kommunikationsteilnehmer 175, 176 dem in den genannten Veröffentlichungen "Technical Realisation of the Short Message Service (SMS); Point-to-Point (PP)" beschriebenen Standard. Anhand der Signalisierungskennzeichnungsdatenfelder 15, 16, 17 in der ersten Kopfinformation 11 kann die zweite Netzwerkeinheit 150 den Typ der Adreßdaten 55, 56, 57 identifizieren. Anhand der Längendatenfelder 40, 45, 46, 47 in der ersten Kopfinformation 11 kann die zweite Netzwerkeinheit 150 die Adreßdaten 55, 56, 57 in der ersten Kopfinformation 11 lokalisieren. Anhand der ersten Datenfelder 20, 21, 22 in der ersten Kopfinformation 11 kann die zweite Netzwerkeinheit 150 die dritten Datenfelder 30, 31, 32 und damit die Telefonnummern der Kommunikationsteilnehmer im Bereich der Adreßdaten 55, 56, 57 lokalisieren. Anhand der zweiten Datenfelder 25, 26, 27 in der ersten Kopfinformation 11 kann die zweite Netzwerkeinheit 150 den Typ der in den dritten Datenfeldern 30, 31, 32 gespeicherten Adressen bzw. Telefonnummern identifizieren. Somit ist die zweite Netzwerkeinheit 150 in der Lage, aus der ersten Kopfinformation 11 die in den dritten Datenfeldern 30, 31, 32 gespeicherten Adressen bzw. Rufnummern zu extrahieren. Die zweite Netzwerkeinheit 150 kann dann für jeden der adressierten Kommunikationsteilnehmer eine neue Kurznachricht bilden und die für den jeweiligen Kommunikationsteilnehmer extrahierte Telefonnummer oder Adresse in die zweite Kopfinformation der neu gebildeten jeweiligen Kurznachricht kopieren, wobei diese neu gebildete Kurznachricht in ihrem Datenteil ebenfalls die Nutzdaten 1 umfasst, jedoch jeweils nur an den Kommunikationsteilnehmer übertragen wird, der durch die jeweils extrahierte Telefonnummer in der zweiten Kopfinformation 12 der neu gebildeten Kurznachricht adressiert ist. Eine erste Kopfinformation ist in einer solchermaßen neu gebildeten Kurznachricht nicht erforderlich.

In dem gemäß Figur 4 beschriebenen Ausführungsbeispiel sind den Adreßdaten 55, 56, 57 jeweils zwei Längendatenfelder zugeordnet. Den ersten Adreßdaten 55 ist das zweite Längendatenfeld 45 und das erste Datenfeld 20 der ersten Adreßdaten 55 als Längendatenfeld zugeordnet. Entsprechendes gilt für die zweiten Adreßdaten 56 und die dritten Adreßdaten 57. Somit ist eines der beiden den jeweiligen Adreßdaten 55, 56, 57 zugeordneten Längendatenfeldern redundant. Zur Einsparung von Übertragungskapazität und zur Erhöhung der für die Nutzdaten 1 verfügbaren Datenmenge in der Kurznachricht 5 kann auf die ersten Datenfelder 20, 21, 22 der Adreßdaten 55, 56, 57 verzichtet werden. Die Werte der ersten Datenfelder 20, 21, 22 können dann aufgrund der verbleibenden Längendatenfelder 45, 46, 47 in der zweiten Netzwerkeinheit 150 berechnet werden.

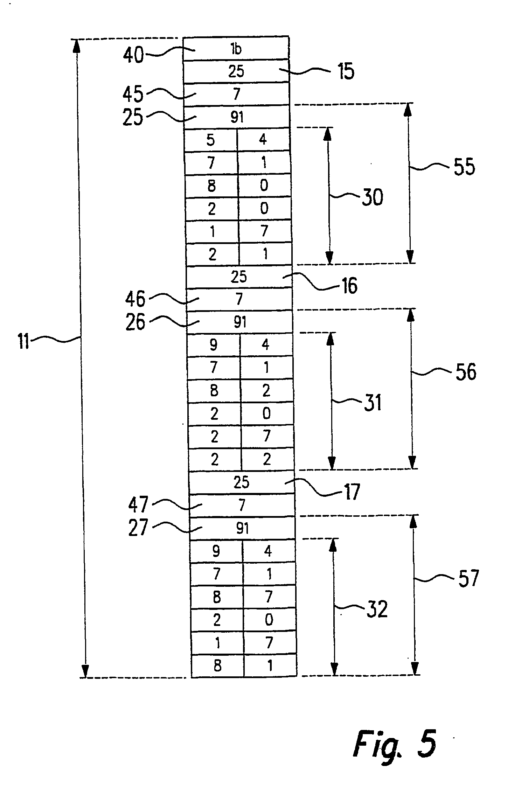

In Figur 5 ist ein zweites Ausführungsbeispiel für die erste Kopfinformation 11 dargestellt, bei dem auf die ersten Datenfelder 20, 21, 22 verzichtet wurde und das ansonsten dem ersten Ausführungsbeispiel nach Figur 4 entspricht, mit dem Unterschied, dass das erste Längendatenfeld 40 nun den um 3 reduzierten Wert 1b für den Parameter UDHL aufweist und das zweite Längendatenfeld 45, das dritte Längendatenfeld 46 und das vierte Längendatenfeld 47 jeweils den um 1 reduzierten Wert 7 für den Parameter IEIDL aufweisen. Dies rührt daher, dass für die Adreßdaten 55, 56, 57 jeweils das Oktett für das erste Datenfeld 20, 21, 22 eingespart wird.

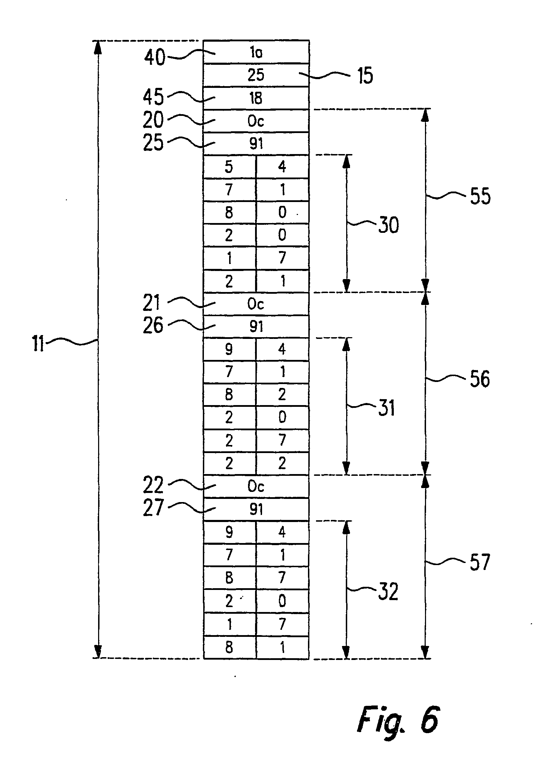

Sowohl beim ersten Ausführungsbeispiel nach Figur 4 als auch beim zweiten Ausführungsbeispiel nach Figur 5 ist den Adreßdaten 55, 56, 57 jeweils ein gleichlautendes Längendatenfeld 45, 46, 47 und ein gleichlautendes Signalisierungskennzeichnungsdatenfeld 15, 16, 17 zugeordnet, so dass auch hier Redundanz vorliegt und Datenkapazität zugunsten der Nutzdaten 1 eingespart werden kann wie das dritte Ausführungsbeispiel nach Figur 6 zeigt. Dort wird nur ein einziges Signalisierungskennzeichnungsdatenfeld in Form des ersten Signalisierungskennzeichnungsdatenfeldes 15 verwendet, das dem ersten Längendatenfeld 40 folgt. Außerdem wird neben dem ersten Längendatenfeld 40 nur noch das zweite Längendatenfeld 45 verwendet, das dem ersten Signalisierungskennzeichnungsdatenfeld 15 folgt und gemäß Figur 6 den Wert 18 im Hexadezimalsystem aufweist. Auf die weiteren Längendatenfelder 46, 47 und die weiteren Signalisierungskennzeichnungsdatenfelder 16, 17 kann dann gemäß Figur 6 verzichtet werden, so dass die Adreßdaten 55, 56, 57 direkt aufeinander folgen und an das zweite Längendatenfeld 45 direkt anschließen. Dabei muß jedoch für die Adreßdaten 55, 56, 57 jeweils wieder das erste Datenfeld 20, 21, 22 mit dem Wert 0c eingeführt werden, um die Lokalisierung der dritten Datenfelder 30, 31, 32 in der zweiten Netzwerkeinheit 150 wieder zu gewährleisten, da ja auf das dritte Längendatenfeld 46 und das vierte Längendatenfeld 47 verzichtet wurde. Das zweite Längendatenfeld 45 gibt somit nun mit dem Wert 18 im Hexadezimalsystem für die Länge IEIDL die Länge aller drei Adreßdaten 55, 56, 57 an. Wie der Figur 6 entnommen werden kann, kann auf diese Weise die Länge der ersten Kopfinformation 11 nochmals um 1 gesenkt werden, da der Wert UDHL des ersten Längendatenfeldes 40 nunmehr 1a im Hexadezimalsystem beträgt.

Wie beschrieben geben die ersten Datenfelder 20, 21, 22 die Adreßdatenlänge der im jeweils zugeordneten dritten Datenfeld 30, 31, 32 abgelegten Adresse bzw. Telefonnummer an. Da der Wert in den ersten Datenfeldern 20, 21, 22 die Anzahl der Halb-Oktette angibt, muß dieser Wert jeweils durch zwei geteilt werden, um die Anzahl der Oktette im jeweiligen dritten Datenfeld 30, 31, 32 zu erhalten. Addiert man zu der Zahl der Oktette des jeweiligen dritten Datenfeldes 30, 31, 32 noch zwei Oktette für das jeweilige Datenfeld 20, 21, 22 und das jeweilige zweite Datenfeld 25, 26, 27 hinzu, so erhält man die Anzahl der Oktette für die jeweiligen Adreßdaten 55, 56, 57. Multipliziert man diesen Wert mit 3, so erhält man die Gesamtanzahl der Oktette für sämtliche Adreßdaten 55, 56, 57 in der ersten Kopfinformation 11. Gemäß Figur 6 sind für die Adreßdaten 55, 56, 57 insgesamt 24 Oktette vorgesehen, die durch den Wert 18 im Hexadezimalsystem für den Parameter IEIDL des zweiten Längendatenfeldes 45 referenziert werden. Aufgrund dieser bekannten Beziehung zwischen dem Wert IEIDL im zweiten Längendatenfeld 45 und den Längenwerten in den ersten Datenfeldern 20, 21, 22 lassen sich die Adreßdaten 55, 56, 57 problemlos in der zweiten Netzwerkeinheit 150 voneinander trennen.

Bisher ist davon ausgegangen worden, dass die Kurznachricht 5 mit mehreren Adressen von Kommunikationsteilnehmern 175, 176 über die erste Netzwerkeinheit 140 zunächst an die zweite Netzwerkeinheit 150 geleitet wird, die dann die erste Kopfinformation 11 auswertet und im weiteren die Nutzdaten 1 an die adressierten Kommunikationsteilnehmer 175, 176 verteilt. Auch wenn die beiden Netzwerkeinheiten 140, 150 zusammengefasst sein können, ist es dabei notwendig, in der zweiten Kopfinformation 12 als erste Zieladresse die Adresse der zweiten Netzwerkeinheit 150 anzugeben.

Alternativ ist es jedoch auch möglich, dass die erste Zieladresse in der zweiten Kopfinformation 12 bereits eine von den Adressen der Kommunikationsteilnehmer 175, 176 darstellt und alle weiteren Adressen der übrigen Kommunikationsteilnehmer wie in den beschriebenen drei Ausführungsbeispielen in der ersten Kopfinformation 11 angegeben werden. In diesem Fall muß die erste Netzwerkeinheit 140 die Funktionen der zweiten Netzwerkeinheit 150 übernehmen und selbst jede eingehende Kurznachricht auf die erste Kopfinformation 11 bzw. die dortigen Signalisierungskennzeichnungsdatenfelder 15, 16, 17 prüfen und die Adressen der zusätzlich gewünschten Kommunikationsteilnehmer extrahieren, um die Nutzdaten 1 auch an diese mit Hilfe von neu zu bildenden Kurznachrichten senden zu können.

Bei den beschriebenen Ausführungsbeispielen wurde von drei verschiedenen Kommunikationsteilnehmern ausgegangen, von denen zwei in Figur 1 dargestellt sind und denen die Adreßdaten 55, 56, 57 in der ersten Kopfinformation 11 zugeordnet sind. In der ersten Kopfinformation 11 können jedoch auch mehr oder weniger als drei Adreßdaten in der beschriebenen Weise nach einem der drei Ausführungsbeispiele übertragen werden. Zusätzlich kann es vorgesehen sein, dass auch Adreßdaten für einen Kommunikationsteilnehmer eines Datennetzes, beispielsweise des Internets in der ersten Kopfinformation 11 enthalten sind, deren Typ sich natürlich von den beschriebenen Adreßdaten unterscheidet und durch ein entsprechendes Signalisierungskennzeichnungsdatenfeld in der ersten Kopfinformation 11 gekennzeichnet werden muß. Die Adresse eines solchen Kommunikationsteilnehmers eines Datennetzes kann dann beispielsweise in Form einer Internet-Adresse im zugehörigen dritten Datenfeld angegeben sein. Die zweite Netzwerkeinheit 150 wird dann die Nutzdaten 1 an einen solchen Kommunikationsteilnehmer als Internet-E-Mail mit der extrahierten Internet-Adresse versenden, wenn sie an ein solches Datennetz angeschlossen ist.

## Patentansprüche

1. Verfahren zur Übertragung einer Kurznachricht (5) in einem Telekommunikationsnetz (100, 200) an einen oder mehrere Kommunikationsteilnehmer (175, 176), wobei die Kurznachricht (5) eine zweite Kopfinformation (12) und ein Datenteil (50) umfasst,
**dadurch gekennzeichnet, dass**
- in der Kurznachricht (5) zur Speicherung von Adressdaten (55, 56, 57) für die Übertragung der Kurznachricht (5) zu einem oder mehr als einem Kommunikationsteilnehmer (175, 176) eine weitere, in ihrer Größe flexible erste Kopfinformation (11) mit einem oder mehreren Datenfeldern (20, 25, 30; 21, 26, 31; 22, 27, 32) übertragen wird,
- anhand eines Signalisierungskennzeichnungsdatenfeld (15) in der ersten Kopfinformation angezeigt wird, ob das zumindest eine Datenfeld überhaupt vorhanden ist bzw. wie es aufgebaut ist,
- jedes der Datenfelder die Adressdaten (55, 56, 57) eines der Kommunikationsteilnehmer (175, 176) umfasst, und
- in der zweiten Kopfinformation (12), die der ersten Kopfinformation (11) vorangestellt angeordnet ist, Quelladressdaten (55, 56, 57) eines ersten Kommunikationsteilnehmers (175) oder Zieladressdaten einer Netzwerkeinheit (140, 150) übertragen werden.

2. Verfahren nach Anspruch 1,
**dadurch gekennzeichnet,**
**dass** das Vorhandensein der ersten Kopfinformation (11) im Datenteil (50) der Kurznachricht (5) durch einen Signalisierungseintrag in der vorangestellten zweiten Kopfinformation (12) angezeigt wird.

3. Verfahren nach einem der vorhergehenden Ansprüche,
**dadurch gekennzeichnet,**
**dass** das jeweilige Telekommunikationsnetz (100, 200) als Mobilfunknetz, insbesondere nach dem GSM- oder UMTS-Standard, ausgebildet ist.

4. Verfahren nach Anspruch 1, 2 oder 3,
**dadurch gekennzeichnet,**
**dass** mit der ersten Kopfinformation (11) mindestens ein Signalisierungskennzeichnungsdatenfeld (15; 16; 17) übertragen wird, das die Signalisierung der Datenfelder (20, 25, 30; 21, 26, 31; 22, 27, 32) umfasst.

5. Verfahren nach Anspruch 4,
**dadurch gekennzeichnet,**
**dass** das mindestens eine Signalisierungskennzeichnungsfeld (15; 16; 17) den Typ der Adressdaten (55, 56, 57) angibt.

6. Verfahren nach einem der vorherigen Ansprüche,
**dadurch gekennzeichnet,**
**dass** das mindestens eine Datenfeld (20, 25, 30; 21, 26, 31; 22, 27, 32) in einem Datenteil .(50) der Kurznachricht (5) Nutzdaten (1) der Kurznachricht (5) vorangestellt übertragen wird.

7. Verfahren nach einem der vorherigen Ansprüche,
**dadurch gekennzeichnet,**
**dass** mit der ersten Kopfinformation (11) mindestens ein Zieladressdatenfeld (30; 31; 32) übertragen wird, das eine Zieladresse der Kurznachricht (5) umfasst.

8. Verfahren nach Anspruch 7,
**dadurch gekennzeichnet,**
**dass** jedem Zieladressdatenfeld (30; 31; 32) ein Adresskennzeichnungsdatenfeld (25; 26; 27) vorangestellt übertragen wird, das einen Typ der Zieladresse angibt.

9. Verfahren nach Anspruch 7 oder 8,
**dadurch gekennzeichnet,**
**dass** jedem Zieladressdatenfeld (30; 31; 32) in der ersten Kopfinformation (11) mindestens ein Längendatenfeld (20, 45; 21, 46; 22, 47) vorangestellt übertragen wird.

10. Verfahren nach einem der Ansprüche 4 bis 9,
**dadurch gekennzeichnet,**
**dass** für mehrere Zieladressdatenfelder (30, 31, 32) genau ein Signalisierungskennzeichnungsdatenfeld (15) mit der ersten Kopfinformation (11) übertragen wird.

11. Verfahren nach einem der vorherigen Anspruche,
**dadurch gekennzeichnet,**
**dass** die Kurznachricht (5) zunächst an eine Netzwerkeinheit (140, 150) des Telekommunikationsnetzes (100; 200) übertragen wird, dass die Adresse mindestens eines der Kommunikationsteilnehmer (175, 176) aus der ersten Kopfinformation (11) der Kurznachricht (5) extrahiert wird, um deren Inhalt zumindest teilweise an diese Adresse zu versenden.

12. Verfahren nach einem der vorstehenden Ansprüche, bei dem das zumindest eine Datenfeld so ausgebildet ist, dass die Adressendaten in Form einer Telefonnummer vorliegen können.

13. Verfahren nach einem der vorstehenden Ansprüche, bei dem das zumindest eine Datenfeld so ausgebildet ist, dass die Adressendaten in Form einer Adresse eines Datennetzes vorliegen können.

14. Verfahren nach dem vorstehenden Anspruch, bei dem die Datenadresse eines Datennetzes als Internet-Adresse ausgebildet ist.

15. Verfahren nach dem vorstehenden Anspruch, bei dem die Daten an einen Kommunikationsteilnehmer, dessen Adresse in der Form einer Internet-Adresse vorliegt, als Internet-E-Mail versendet wird, wenn das Telekommunikationsnetz an das Datennetz angeschlossen ist.

16. System zur Übertragung einer Kurznachricht (5) in einem Telekommunikationsnetz (100, 200) mit Mitteln zur Durchführung des Verfahrens nach einem der vorstehenden Ansprüche 1 bis 15.

## Claims

1. Method for transmitting a short message (5) in a telecommunication network (100, 200) to one or a number of communication stations (175, 176), the short message (5) comprising a second header information item (12) and a data section (50), **characterized in that**
- a further, first header information item (11) of flexible size with one or more data fields (20, 25, 30; 21, 26, 31; 22, 27, 32) is transmitted in the short message (5) for the purpose of storing address data (55, 56, 57) for the transmission of the short message (5) to one or more than one communication station (175, 176),
- a signalling identification data field (15) in the first header information item is used to indicate whether the at least one data field is present in the first place and how it is set up,
- each of data fields comprises the address data (55, 56, 57) from one of the communication stations (175, 176), and
- in the second header information item (12), which is arranged to precede the first header information item (11), source address data (55, 56, 57) of a first communication station (175) or destination address data of a network unit (140, 150) are transmitted.

2. Method according to Claim 1, chromatography the presence of the first header information item (11) in the data section (50) of the short message (5) is indicated by a signalling entry in the preceding second header information item (12).

3. Method according to one of the preceding claims, **characterized in that** the respective telecommunication network (100, 200) is in the form of a mobile radio network, particularly in accordance with the GSM or UMTS Standard.

4. Method according to Claim 1, 2 or 3, **characterized in that** with the first header information item (11), at least one signalling identification data field (15; 16; 17) is transmitted which comprises the signalling of the data fields (20, 25, 30; 21, 26, 31; 22, 27, 32).

5. Method according to Claim 4, **characterized in that** the at least one signalling identification data field (15; 15; 17) specifies the type of address data (55, 56, 57).

6. Method according to one of the preceding claims, **characterized in that** the at least one data field (20, 25, 30; 21, 26, 31; 22, 27, 32) is transmitted in a data section (50) of the short message (5) preceding useful data 1) of the short message (5).

7. Method according to one of the preceding claims, **characterized in that** with the first header information item (11), at least one destination address data field (30; 31; 32) is transmitted which comprises a destination address of the short message (5).

8. Method according to Claim 7, **characterized in that** an address identification data field (25; 26; 27) is transmitted preceding each destination address data field (30; 31; 32) specifies a type of the destination address.

9. Method according to Claim 7 or 8, **characterized in that** at least one length data field (20, 45; 21, 46; 22, 47) is transmitted preceding each destination address data field (30; 31; 32) in the first header information item (11).

10. Method according to one of Claims 4 to 9, **characterized in that** for a number of destination address data fields 930, 31, 32), exactly one signalling identification data field (15) is transmitted with the first header information item (11).

11. Method according to one of the preceding claims, **characterized in that** the short message (5) is first transmitted to a network unit 9140, 150) of the telecommunication network (100; 200), **in that** the address of at least one of the communication stations (175, 175) is extracted from the first header information item (11) of the short message (5) in order to send its content at least partially to this address.

12. Method according to one of the preceding claims, in which the at least one data field is in a form such that the address data may be present in the form of a telephone number.

13. Method according to one of the preceding claims, in which the at least one data field is in a form such that the address data may be present in the form of an address from a data network.

14. Method according to the preceding claim, in which the data address from a data network is in the form of an Internet address.

15. Method according to the preceding claim, in which the data are sent to a communication station, the address of which is present in the form of an Internet address, as an Internet E-mail when the telecommunication network is connected to the data network.

16. System for transmitting a short message (5) in a telecommunication network (100, 200) having means for carrying out the method according to one of the preceding Claims 1 to 15.

## Revendications

1. Procédé pour transmettre un message court (5) dans un réseau de télécommunications (100, 200) vers un ou plusieurs abonnés de communications (175, 176), le message court (5) incluant une deuxième information d'en-tête (12) et une partie de données (50), **caractérisé en ce que** :
- une autre première information d'en-tête (11) de taille flexible avec un ou plusieurs champs de données (20, 25, 30 ; 21, 26, 31 ; 22, 27, 32) est transmise dans le message court (5) pour le stockage de données d'adresses (55, 56, 57) pour la transmission du message court (5) vers un ou plus d'un abonné de communications (175, 176) ;
- il est indiqué, à l'aide d'un champ de données d'identification de signalisation (15) dans la première information d'en-tête, si l'au moins un champ de données est présent resp. comment il est construit ;
- chacun des champs de données comprend les données d'adresse (55, 56, 57) de l'un des abonnés de communications (175, 176) ; et
- des données d'adresse source (55, 56, 57) d'un premier abonné de communications (175) ou des données d'adresse de destination d'une unité de réseau (140, 150) sont transmises dans la deuxième information d'en-tête (12) qui précède la première information d'en-tête (11).

2. Procédé selon la revendication 1, **caractérisé en ce que** la présence de la première information d'en-tête (11) dans la partie de données (50) du message court (5) est indiquée par une entrée de signalisation dans la deuxième information d'en-tête (12) antéposée.

3. Procédé selon l'une des revendications précédentes, **caractérisé en ce que** le réseau de télécommunications respectif (100, 200) se présente sous la forme d'un réseau de téléphonie mobile réalisé en particulier selon le standard GSM ou le standard UMTS.

4. Procédé selon la revendication 1, 2 ou 3, **caractérisé en ce qu'**est transmis avec la première information d'entête (11) au moins un champ de données d'identification de signalisation (15 ; 16 ; 17) qui comprend la signalisation des champs de données (20, 25, 30 ; 21, 26, 31 ; 22, 27, 32).

5. Procédé selon la revendication 4, **caractérisé en ce que** l'au moins un champ de données d'identification de signalisation (15 ; 16 ; 17) indique le type des données d'adresses (55, 56, 57).

6. Procédé selon l'une des revendications précédentes, **caractérisé en ce que** l'au moins un champ de données (20, 25, 30 ; 21, 26, 31 ; 22, 27, 32) est transmis dans une partie de données (50) du message court (5) en étant antéposé aux données utiles (1) du message court (5).

7. Procédé selon l'une des revendications précédentes, **caractérisé en ce qu'**est transmis, avec la première information d'en-tête (11), au moins un champ de données d'adresse de destination (30 ; 31 ; 32) qui comprend une adresse de destination du message court (5).

8. Procédé selon la revendication 7, **caractérisé en ce qu'**est transmis en étant antéposé à chaque champ de données d'adresse de destination (30 ; 31 ; 32) un champ de données d'identification d'adresse (25 ; 26 ; 27) qui indique un type de l'adresse de destination.

9. Procédé selon la revendication 7 ou 8, **caractérisé en ce qu'**au moins un champ de données de longueur (20, 45 ; 21, 46 ; 22, 47) est transmis en étant antéposé à chaque champ de données d'adresse de destination (30 ; 31 ; 32) dans la première information d'en-tête (11).

10. Procédé selon l'une des revendications 4 à 9, **caractérisé en ce qu'**est transmis, pour plusieurs champs de données d'adresses de destination (30, 31, 32), exactement un champ de données d'identification de signalisation (15) avec la première information d'entête (11).

11. Procédé selon l'une des revendications précédentes, **caractérisé en ce que** :
- le message court (5) est transmis tout d'abord à une unité de réseau (140, 150) du réseau de télécommunications (100 ; 200) ;
- l'adresse d'au moins l'un des abonnés de communications (175, 176) est extraite de la première information d'en-tête (11) du message court (5) pour envoyer son contenu au moins en partie à cette adresse.

12. Procédé selon l'une des revendications précédentes, dans lequel l'au moins un champ de données est réalisé de manière telle que les données d'adresse peuvent se présenter sous la forme d'un numéro de téléphone.

13. Procédé selon l'une des revendications précédentes, dans lequel l'au moins un champ de données est réalisé de manière telle que les données d'adresse peuvent se présenter sous la forme d'une adresse d'un réseau d'adresses.

14. Procédé selon la revendication précédente, dans lequel l'adresse de données d'un réseau de données se présente sous la forme d'une adresse internet.

15. Procédé selon la revendication précédente, dans lequel les données sont envoyées comme message électronique internet à un abonné de communications dont l'adresse se présente sous la forme d'une adresse internet lorsque le réseau de télécommunications est raccordé au réseau de données.

16. Système de transmission d'un message court (5) dans un réseau de télécommunications (100, 200) avec des moyens pour exécuter le procédé selon l'une des revendications précédentes 1 à 15.
